# EUROPEAN PATENT APPLICATION

(11) **EP 0 521 228 A1**
(43) Date of publication of application: **07.01.1993**
(21) Application number: 91830302.5
(22) Date of filing: 05.07.1991
(51) Int. Cl.: B29C 39/02, B29C 39/10

(54) **A method of embodying decorative methacrylic sheets or panels, means for the implementation of such a method, and the sheets or panels obtainable thereby**

(71) Applicant: SMART ITALIA S.r.l., I-00040 Pomezia (Roma) (IT)
(72) Inventor: Morvillo, Giacinto, Roma (IT)
(74) Representative: Lanzoni, Luciano

(57) **Abstract**

A method of casting polymethyl methacrylate in panels (1) with an incorporated decorative design or pattern comprises the steps of positioning a removable die (2) on a first plate of glass (3), which establishes the contours (9) of the pattern, adding a sheet of ultraflexible imprinted film (4) capable of adapting closely to the contours of the die (2), and placing inserts (5) of contrasting material on the surface of the film in positions afforded by matching recesses (10) created within the contours (9); seals (7) are then positioned around the periphery, a second plate of glass (6) is offered and secured with clips (8), whereupon methacrylic resin is poured into the void between the plates (3, 6) and polymerized. On separation of the plates, the polymethyl methacrylate panel (1) emerges with the inserts (5) fully embedded and the surface bearing the impression of the imprinted film (4).

## Description

The invention relates to a method of fashioning decorative sheets or panels of methacrylic material destined in particular for use as decor elements in the design of interiors both public and private, e.g. glazed areas, sliding room divider and door systems, partition walls etc., as an alternative option to glass, but additionally for manufacturing a variety of articles such as lampshades, ornaments and so forth.

Conventionally, articles in polymethyl methacrylate are fashioned by casting, extrusion and injection methods. In the case of sheets or panels, and more especially those incorporating colour or surface decoration, the preferred method is casting.

Sheets and panels obtained by casting are the most suitable for working by hand, since their optical characteristics and thickness remain unaffected by such manipulation; cast methacrylic material also affords a notable resistance to aging from exposure to weathering agents and solar radiation, so that exterior applications are also rendered possible. Sheets and panels currently produced for stock are available in a variety of sizes and thickness, from 2 or 3 mm to slabs of 20 and 30 cm, and in some instances with an imprinted decoration or design on on one or both surfaces; such materials are clear, opaque, or tinted in single colours.

As regards the embodiment of such clear, opaque or tinted sheets or panels, the prior art teaches the use of moulds comprising two polished plate glass surfaces, from which to obtain sheets and panels of equal smoothness on either side; alternatively, the plates may be etched, abraded or corroded in such a way as to produce a determined surface texture or pattern that will be taken up by the methacrylic resin when poured into the mould and polymerized.

Needless to say, the mould and the etched glass are used to produce a sheet or panel of predetermined and unvarying dimensions, colour and decorative appearance; that is to say, different decor effects dictate a diversity of moulds.

Any additional decoration, moreover, consisting perhaps in a motif or an area of different colour, must be applied to the cast surface in a further operation.

On the industrial scale, this type of procedure is somewhat slow and economically disadvantageous, inasmuch as a different size and pattern of sheet or panel requires a different mould, hence the preparation of a new etched glass; what is more, the further application of surface decoration (in the majority of cases a manual operation) can never be effected in such a way as to ensure a perfect reproduction every time.

Accordingly, the object of the present invention is to overcome the drawbacks and limitations mentioned above.

A first object is therefore to set forth a new and industrially conceived procedure by which to form decor sheets or panels in polymethyl methacrylate, such as will enable an extensive and almost total capacity for the variation of decorative effects using the same moulds and ensuring a faultless and continued reproduction of the selected decoration.

A further object of the invention is to enable the adoption on industrial scale of a method by which sheets or panels can be formed and decorated even to different designs or patterns, introduced as new supply or in response to demand, without modifying the system and without importing new moulds.

Another object of the invention is to enable the production of decor sheets or panels to any given design or pattern featuring areas of different colour or varied chromatic effects, including those obtained by the addition of materials or elements different to the cast resin, which are mingled to simulate the appearance of Murano glass and similar articles.

The stated objects are realized in a method as characterized by the appended claims, which permits of forming sheets or panels of methacrylic material in an unlimited variety of pattern and/or colour combinations and comprises, essentially:
- a first step of positioning a removable die, which defines the contours of a given figure or pattern, on a first plate of glass;
- a second step of covering the die with a film of suitable ultraflexible imprinted material such as will adapt to the shape of the die while occupying the entire expanse and adhering to the surface of the first plate of glass;
- a third step of arranging one or more inserts of varying type or nature on the imprinted surface of the film in positions coinciding with one or more circumscribed recesses matched peripherally to the inserts and created by the contours of the die, such that the inserts are accommodated within and retained by the recesses;
- a fourth step of placing sealing elements around the periphery of the first plate of glass to define the external outline of the formed sheet or panel, positioning a second plate of glass on the sealing elements and applying means from externally to lock the plates together;
- a fifth step of filling the void between the two plates of glass with methacrylic resin supplemented according to prior art practice with the usual and appropriate additives and catalysts, and bringing about polymerization of the resin;
- a sixth step of separating the plates of glass to enable removal of the sheet or panel of polymethyl methacrylate now formed and reproducing the desired figure or pattern.

The invention will now be described in detail, by way of example, with the aid of the accompanying drawings, in which:
- figs 1 to 4 illustrate the main steps of a method and the means for its implementation, according to the present invention, in a sectional view taken through A-A of fig 5;
- fig 5 illustrates certain of the means by which to implement the method according to the invention, viewed in axonometric projection;
- fig 6 is a further section through A-A of fig 5, showing a particular step of the method according to the invention;
- fig 7 shows four examples of a sheet or panel obtainable with the method and means according to the invention.

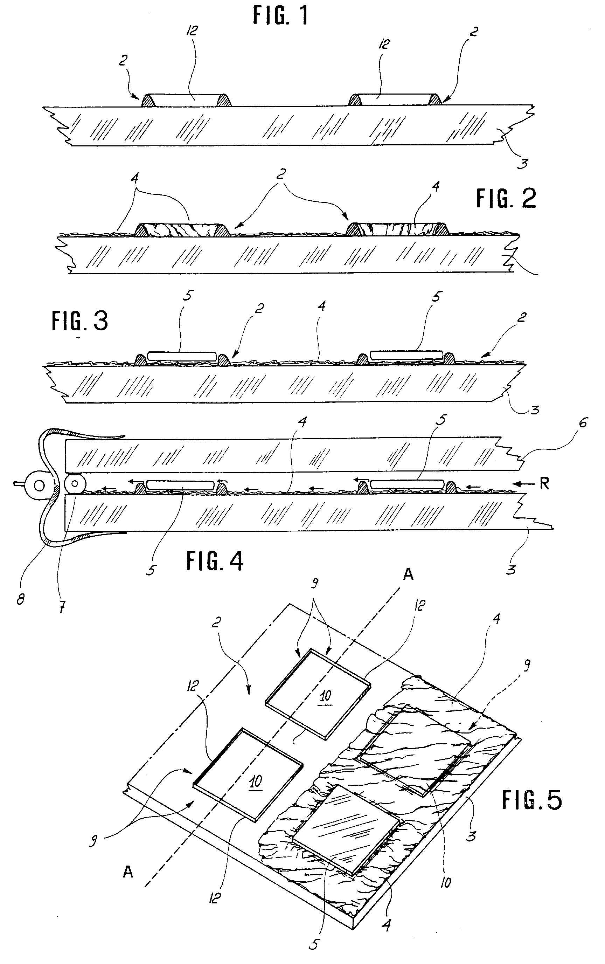

With reference to the drawings, figs 1 to 4 afford a detailed illustration of the steps of the method according to the present invention, viewed on the cutting plane marked A-A in fig 5. The projection of fig 5 in turn affords a schematic illustration of certain of the means envisaged, according to the invention, for implementation of such a method.

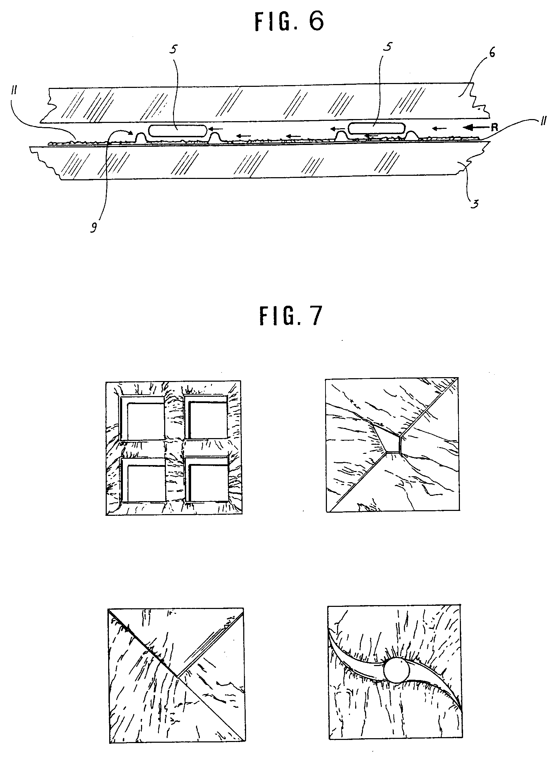

The method in question uses a mould of conventional embodiment consisting in a first plate of glass 3, a second plate of glass 6, sealing elements 7 and locking means 8, and comprises operations effected in the following sequence:
- a first step (fig 1) in which a removable die 2, serving to establish the contours of the desired figure or pattern, is positioned on the first plate of glass 3;
- a second step (fig 2) in which the die 2 and the entire expanse of the first plate of glass 3 are covered over with an ultraflexible layer of film 4 embodied in a material that will not react with methacrylic resin, thereby enabling its detachment subsequently without difficulty, and bearing an imprinted surface; the film 4 adapts to the shape of the die 2, and in particular to the relative contours 9, while adhering to the surface of the plate of glass 3;
- a third step (fig 3) of arranging one or more inserts 5 of varying type or nature on the upward facing side of the film 4 in positions coinciding with one or more circumscribed recesses 10 matched peripherally to the inserts and created by the contours 9 of the die, in such a manner that the inserts are retained internally of the recesses 10 by the contours 9;
- a fourth step (fig 4) in which sealing elements 7 of conventional embodiment are placed around the periphery of the first plate of glass 3 to define the external outline of the formed sheet or panel according to the present invention, denoted 1 in fig 7, whereupon the second plate of glass 6 is positioned on the sealing elements 7 and the two plates are locked together by the application of conventional means denoted 8, for example spring clips as illustrated in fig 4;
- a fifth step (fig 4) in which methacrylic resin is poured between the two plates of glass 3 and 6 and polymerized, the resin naturally having been mixed previously with appropriate additives and catalysts as taught by the prior art;
- a sixth step of unlocking the plates of glass 3 and 6 and removing the polymethyl methacrylate sheet or panel 1, now formed and with the desired figure or pattern duly reproduced as in fig 7.

As discernible from fig 4, the contours 9 of the die 2 are of shape and depth such as will permit of accommodating the inserts 5 stably while allowing the resin to permeate above and below each one (see arrows in fig 4), with the result that the inserts remain completely embedded once polymerization has occurred.

The two initial steps of positioning the die 2 and the film 4 might be combined in one step whereby the first plate of glass 3 is covered over with a single thin layer of material 11 in which the die contours 9 are moulded in relief and of which the surface is imprinted in the manner of the film 4.

The method according to the invention will further comprise successive operations whereby the cast decor sheets or panels 1 are thermoformed, bent, rendered convex, or shaped mechanically around the periphery in such a way as to produce articles of diverse nature and application.

Means by which to obtain decor sheets or panels 1 by implementation of the above method comprise a removable die 2 consisting in one or more slender, elongated rigid or flexible elements 12 of depth and thickness sufficient to accommodate and retain the inserts 5, which combine to establish the contours 9 of a selected figure or pattern (fig 5).

The elements 12 in question might be embodied in any given material (wood, aluminium, plastics) that will not react either with the methacrylic resin or to the conditions of polymerization. In practice, the elements 12 can be affixed temporarily to the sheet of glass 3, e.g. with a non-bonding adhesive, in such a way as to remain in place at least during the steps of assembling and positioning the die 2 and establishing the contours 9 of the figure or pattern selected.

As shown in fig 2, the film 4 is designed to adapt to the entire surface of the first plate of glass 3 and the die 2 positioned thereon. The film material is such that it will not undergo chemical attack from the methacrylic resin, hence inert, and such also as enables its easy separation from the sheet or panel 1 following polymerization of the resin; accordingly, the material in question preferably will be one of synthetic origin such as polyester, or alternatively, paper, aluminium foil etc..

Advantageously, the film 4 is imprinted or moulded in such a way as to present protrusions, grooves or ridges distributed regularly or irregularly over the entire surface or at localized areas, of which the impression will remain in the surface of the decor sheet or panel following polymerization of the resin.

The one or more inserts 5 may be of various type and nature, while substantially flat of necessity, and serve to constitute elements giving chromatic or spatial definition of the selected figure or pattern. In effect, the inserts are cut to the size and shape of selected parts of the decoration, and matched to the circumscribed recesses 10 created by the contours 9 of the die 2. The inserts 5 likewise must be embodied in a material compatible with the methacrylic resin, i.e. fabric, paper, wood, metal, or pieces of other methacrylic sheet in different colours, and indeed any other suitable composition that can be engulfed by the polymerizing resin and remain embedded and visible thereafter in such a way as to give the desired effect.

To reiterate, the die 2 and the film 4 might be discarded in favour of a single imprinted sheet 11 of material selected according to the criteria mentioned above and possessing the same required properties of compatibility, of which the surface exhibits both the die contours 9 moulded in relief and the imprinted effect of the film 4 as required for the particular pattern selected.

Fig 7 illustrates examples of the sheet or panel 1 obtainable by way of the method disclosed and using the relative means for its implementation, in which the figures or patterns appear as definable areas rendered distinct, whether by colour contrast or by the type of material, through the presence of the inserts appropriately positioned and embedded in the polymerized resin. Designs and patterns are obtainable in an endless variety, and each can be exactly reproduced ad infinitum.

Depending upon the types of additives utilized, the sheets or panels 1 can be cast opaque, clear or uniformly tinted, and in any event according to the requirements of coordinating the ground with the pattern of the embedded inserts.

## Claims

1. A method of embodying decorative methacrylic sheets or panels cast in a mould consisting in a first plate of glass (3), a second plate of glass (6), sealing elements (7) and locking means (8),
characterized
in that it comprises:
- a first step in which a removable die (2), serving to establish the contours (9) of a given decorative design or pattern, is positioned on the first plate of glass (3);
- a second step in which a film (4) of ultraflexible material bearing an imprinted surface is laid over the die (2) and over the entire expanse of the first plate of glass (3), in such a way as to adapt to the contours of the die while adhering to the surface of the glass;
- a third step of arranging one or more inserts (5) of varying type or nature on the imprinted surface of the film (4) in positions coinciding with one or more relative circumscribed recesses (10) matched peripherally to the inserts and created by the contours (9) of the die (2), in such a manner that the inserts are retained internally of the recesses by the contours;
- a fourth step in which the sealing elements (7) are placed around the periphery of the first plate of glass (3) to establish the external outline of the formed sheet or panel (1), whereupon the second plate of glass (6) is positioned on the sealing elements (7) and the two plates are secured one to the other by applying the locking means (8);
- a fifth step in which methacrylic resin, mixed with appropriate additives and catalysts as taught by the prior art, is poured between the two plates of glass (3, 6) and polymerized;
- a sixth step of unlocking the plates of glass (3, 6) and removing the polymethyl methacrylate sheet or panel (1), duly formed with the inserts (5) embedded and exhibiting the decorative design or pattern selected.

2. A method as in claim 1, wherein the contours (9) of the die (2) are of shape and depth sufficient to permit of accommodating the inserts (5) stably while allowing the poured methacrylic resin to permeate above and below the inserts, in such a way that the inserts remain completely embedded in the resin as polymerization occurs.

3. A method as in claim 1, wherein the first and the second steps of positioning the die (2) and the film (4), respectively, are combined in the single step of covering the first plate of glass (3) with a thin layer of material (11) into which the die contours (9) are moulded in relief and of which the surface offered to the resin is imprinted.

4. A method as in claim 1, comprising the further step of subjecting the cast decor sheet or panel (1) to successive operations of thermoforming or bending or convexing, or mechanical shaping of its external outline.

5. Means by which to fashion decor sheets or panels by implementation of the method of claim 1,
comprising:
- a removable die (2) consisting in one or more slender, elongated rigid or flexible elements (12) that can be arranged to establish the contours (9) of a selected design or pattern;
- an ultraflexible film (4) of material designed to adhere to the surface of the first plate of glass (3) while adapting to the contours (9) of the die (2) beneath;
- one or more essentially flat inserts (5) of varied type or nature, embodied in a material compatible with methacrylic resin and constituting elements by which to achieve chromatic or spatial definition of the selected design or pattern.

6. Means as in claim 5, wherein the inserts (5) are cut to the size of respective parts of the design or pattern selected, matched to and retainably positionable in corresponding recesses (10) created with and circumscribed by the elements (12) of the removable die (2).

7. Means as in claim 5, wherein the inserts (5) consist in pieces of wood, of fabric, of paper, of tinted polymethyl methacrylate or of other plastics material.

8. Means as in claim 5, wherein the film (4) consists in polyester, paper, or other material of synthetic origin.

9. Means as in claim 5, wherein the thin layer (11) of imprinted material bearing the selected design or pattern is a plastics material.

10. A product obtained by implementation of the method of claim 1 and utilizing the means of claim 5, consisting in a sheet or panel (1) decorated with a design or pattern created by the contrast between the colour or type of material of the selectively positioned and embedded inserts (5) and that of the polymerized resin.

11. A product as in claim 10, wherein the decorated sheet or panel (1) is opaque.

12. A product as in claim 10, wherein the decorated sheet or panel (1) is transparent and clear.

13. A product as in claim 10, wherein the decorated sheet or panel (1) is tinted.
